(19) Europäisches Patentamt
European Patent Office
Office européen des brevets

(11) Publication number: **0 259 040 A1**

## (12) EUROPEAN PATENT APPLICATION

(21) Application number: **87307196.3**

(22) Date of filing: **14.08.87**

(30) Priority: **01.09.86 JP 203660/86**

(43) Date of publication of application: **09.03.88 Bulletin 88/10**

(84) Designated Contracting States: **DE FR GB**

(51) Int. Cl.⁴: **H01B 1/12**, C08F 38/00

(71) Applicant: **HITACHI, LTD.**
**6, Kanda Surugadai 4-chome**
**Chiyoda-ku Tokyo 101(JP)**

(72) Inventor: **Araya, Kotaro Hitachi Daiyon Kyoshinryo**
**14-6 Nishikoigakubo-4-chome**
**Kokubunji-shi(JP)**

(74) Representative: **Paget, Hugh Charles Edward et al**
**MEWBURN ELLIS & CO. 2/3 Cursitor Street**
**London EC4A 1BQ(GB)**

# (54) Electroconductive polydiacetylene.

㊷ An electroconductive polydiacetylene having charge transfer complexes composed of a combination of donor components and acceptor components possessed by a specific electron donor substance and a specific electron acceptor substance, respectively, where the electroconductivity is developed by the change transfer complexes formed on the side chains without any doping of an impurity component.

The structural unit of the polymer is

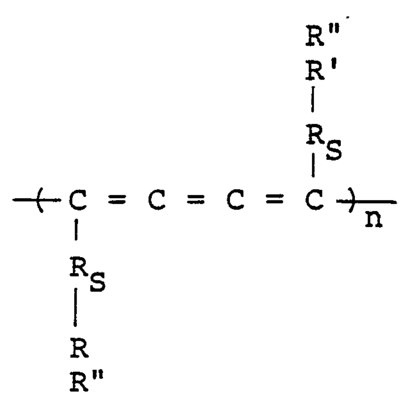

wherein R and R′ are terminal groups on the side chains, $R_S$ is optional and is not in a conjugated state with the main chain, R″ is an electron acceptor or donor substance, and n is an integer of 6 or more, and at least one of R and R′ is combined with the electron acceptor or donor compound R″, to form a charge transfer complex.

EP 0 259 040 A1

# ELECTROCONDUCTIVE POLYDIACETYLENE

This invention relates to electroconductive polydiacetylene.

Polydiacetylene is a peculiar polymer obtained as single crystal by solid state polymerization of crystals of diacetylene derivative as the monomer by irradiation of heat, light, $\gamma$-rays, etc. In addition to the feature that polydiacetylene can be obtained as single crystal, polydiacetylene is expected as an electroconductive material, because the main chain of the polymer is in a conjugated state similar to that of the polyacetylene well known as an electroconductive polymer. Furthermore, applications of polydiacetylene as a non-linear optical material or a display material on the basis of the side chain have been proposed. General discussion of the polymer is given in "Kotai Butsuri (Solid-state Physics)", Vol. 22, 845-856 (I985), "Kagaku no Ryoiki (Field of Chemistry)", Vol. 35, I96-204 (I98I), etc.

So far as the electroconductivity of polydiacetylene is concerned, polydiacetylene is an electroinsulator having a low electroconductivity, but it has been expected from the conjugated state of polymer main chain that the electroconductivity can be enhanced by doping the polydiacetylene with an electron donor dopant or an electron acceptor dopant. However, the electro conductivity of polydiacetylene could not been acutally enhanced by the doping ["Kogaku Sosetsu (Review on Chemistry)", Vol. 42, I20-I30], because the dopant was not thoroughly taken into the polydiacetylene owing to the good crystallinity of polydiacetylene, as pointed out therein.

Recently, it has been tried to conduct the doping before or during the polymerization of polydiacetylene, and electroconductive polydiacetylene has been obtained thereby [Japanese Patent Application Kokai (Laid-open) No. 58-47009]. However, the doping polymerization is made greatly at the sacrifice of the good crystallinity of polydiacetylene.

Apart from the development of electroconductivity by the doping, it has been tried to develop an electroconductivity on a polymeric compound by introducing charge transfer complexes to its side chain, but the arrangement of the charge transfer complexes on the polymer compound is irregular owing to the randomness of the employed polymer main chain, and no good results have been obtained yet.

An object of the present invention is to provide novel electroconductive polydiacetylene having an electroconductivity developed through the side chains on the basis of good crystallinity of polydiacetylene main chain.

The present invention involves combining a specific electron donor substance with a specific electron acceptor substance and forming on side chains charge transfer complexes comprising a donor component and an acceptor component possessed by the said electron donor substance and the said electron acceptor substance, respectively, from the combination, thereby developing an electroconductivity on the polydiacetylene.

Development of an electroconductivity on the present electroconductive polydiacetylene can be made by forming charge transfer complexes on the side chains.

The present polydiacetylene has a structural unit represented by the following formula, where at least one of terminal groups R and R′ of the side chains is an electron donor group or an electron acceptor group, which forms a charge transfer complex with an electron acceptor substance or an electron donor substance R″:

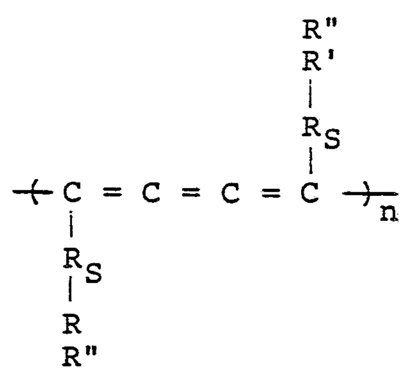

where R and R′ are terminal groups of diacetylene side chains; $R_S$ is an atom or atomic group not conjugatable with the main chain; n is an integer of 6 or more; R″ is an electron acceptor substance or an electron donor substance and is an electron acceptor substance when both R and R′ are electron donor

groups, or an electron donor substance when both R and R′ are electron acceptor groups. $R_S$ is a spacer present between R or R′ and the main chain, and can be omitted, but the presence of the spacer can enhance the degree of polymerization of the polymer.

More specifically, the electroconductivity can be developed by forming charge transfer complexes based on a combination of an electron donor substance selected from the following general formulae (I), (2) and (3) with an electron acceptor substance selected from the following general formulae (4), (5) and (6), where only one combination of the general formula (I) with the general formula (4) is excluded from the formation of electroconductive polydiacetylene, because they have no polymerization site.

In the case of a single molecule containing both electron donor part and an electron acceptor part within the molecule as given by the following general formula (7), it can form a charge transfer complex by itself, and thus can form electroconductive polydiacetylene.

(I) General formulae for electron donor substances:

$R_D$ , $R_D'$ .... (I)

$R_D$ -$R_S$ -C≡C - C≡C - $R_S$ -$R_D$ .... (2)

$R_D$ -$R_S$ - C≡C - C≡C - $R_S$ -$R_1$ .... (3)

(II) General formulae for electron acceptor substances:

$R_A$, $R_A'$ .... (4)

$R_A$ -$R_S$ -C≡C - C≡C - $R_S$ -$R_A$ .... (5)

$R_A$ -$R_S$ - C≡C - C≡C - $R_S$ -$R_2$ .... (6)

wherein

$R_D'$: atom or atomic group acting as an electron donor by itself
$R_D$: atom or atomic group acting as a donor
$R_A'$: atom or atomic group acting as an electron acceptor by itself
$R_A$: atom or atomic group acting as an acceptor
$R_1$: atom or atomic group failing to act as an electron donor
$R_2$: atom or atomic group failing to act as an electron acceptor
$R_S$: atom or atomic group acting as a spacer

(III) General formula for single molecule containing both electron donor part and electron acceptor part:

$R_D$ -$R_S$ -C≡C - C≡C - $R_S$ -$R_A$ .... (7)

where $R_D$, $R_S$ and $R_A$ have the same meanings as defined above.

Thus, I3 combinations are available for the charge transfer complexes, and are shown in the following Table I by way of structural formulae, where the charge transfer part is shown by "CT" (charge transfer). Electroconductive polydiacetylene can be obtained by polymerization of these individual combinations.

Table 1

| Electroconductive polydiacetylene | Combination |
|---|---|
| $R_A{}'\ R_D - R_S-C\equiv C-C\equiv C-R_S-R_1$ | (4) + (3) |
| $R_A{}'\ R_D - R_S-C\equiv C-C\equiv C-R_S-R_D$ | (4) + (2) |
| $R_D{}'\ R_A - R_S-C\equiv C-C\equiv C-R_S-R_2$ | (1) + (6) |
| $R_D{}'\ R_A - R_S-C\equiv C-C\equiv C-R_S-R_A$ | (1) + (5) |
| $R_D\ R_A - R_S-C\equiv C-C\equiv C-R_S-R_A$ | (1) + (5) |
| $R_D\ R_A - R_S-C\equiv C-C\equiv C-R_S-R_2$ | (1) + (6) |
| $R_A\ R_D - R_S-C\equiv C-C\equiv C-R_S-R_D$ | (4) + (2) |
| $R_A\ R_D - R_S-C\equiv C-C\equiv C-R_S-R_1$ | (4) + (3) |
| $R_D-R_S-C\equiv C-C\equiv C-R_S - R_D\ R_A - R_S-C\equiv C-C\equiv C-R_S-R_A$ | (2) + (5) |
| $R_D-R_S-C\equiv C-C\equiv C-R_S - R_D\ R_A - R_S-C\equiv C-C\equiv C-R_S-R_2$ | (2) + (6) |
| $R_A-R_S-C\equiv C-C\equiv C-R_S - R_A\ R_D - R_S-C\equiv C-C\equiv C-R_S-R_1$ | (3) + (5) |
| $R_2-R_S-C\equiv C-C\equiv C-R_S - R_A\ R_D - R_S-C\equiv C-C\equiv C-R_S-R_1$ | (3) + (6) |
| $R_D-R_S-C\equiv C-C\equiv C-R_S - R_A\ R_D - R_S-C\equiv C-C\equiv C-R_S-R_A$ | (7) + (7) |

Note: shows a "CT" part

Atom or atomic group acting as a donor can be classified into two groups, i.e. a component $R'_D$ acting as an electron donor by itself and a component $R_D$acting as an electron donor not only by itself but also after chemically combined.

The donor component $R_D'$ acting as an electron donor by itself includes alkali metals such as lithium, sodium, potassium, rubidium and cesium.

The donor component $R_D$ acting as an electron donor not only by itself but also after chemically combined includes (a) aromatic hydrocarbons such as naphthalene, anthracene, phenanthrene, pyrene, perylene, coronene, violanthrene, azulene, hexamethylbenzene, etc., (b) fulvalene derivatives such as tetrathiofulvalene, tetraselenofulvalene, tetramethyltetrafulvalene, tetrathiotetracene, etc., (c) aromatic amines such as N-methylpyridinium, phenoxazine, phenoselenazine, carbazole, etc., (d) phthalocyanine and its derivatives such as copper phthalocyanine, lead phthalocyanine, metal-free phthalocyanine, etc.

Other substances capable of acting as a donor component as disclosed in "Kagaku Sosetsu (Review on Chemistry)", Vol. 42, 59-90: "Chemistry of conductive low dimensional solids" can be used.

The component $R_1$ failing to act as a donor in the general formula (3) is not particularly limited, so long as it is not included in the said components acting as a donor.

Atom or atomic group acting as an acceptor can be likewise classified into two groups, i.e. component $R_A'$ acting as an electron acceptor by itself and component $R_A$ acting as an electron acceptor not only by itself, but also after chemically combined.

The acceptor component acting as an electron acceptor by itself includes (a) halogens such as fluorine, chlorine, bromine and iodine, (b) Lewis acids such as phosphorus pentafluoride, arsenic pentafluoride, antimony pentafluoride, boron trifluoride, boron trichloride, boron tribromide, ferric chloride, etc. and (c) Brösted acids such as hydrofluoric acid, hydrochloric acid, hydrobromic acid, perchloric acid, sulfuric acid, nitric acid, etc.

The acceptor component $R_A$ acting as an electron acceptor not only by itself, but also after chemically combined includes (a) tetracyanoquinodimethane and its derivatives such as tetracyanoquinodimethane, etc., (b) trinitrobenzene and its derivatives such as trinitrobenzene, 2,4-dinitrobenzene, etc. and (c) benzoquinones such as chloranil, bromoanil, dicyanodibromobenzoquinone, etc.

Other substances capable of acting as an acceptor component as disclosed in "Kagaku Sosetsu (Review on Chemistry", Vol. 42, 59-90: "Chemistry of conductive low dimensional solids" can be used.

The component $R_2$ failing to act as an acceptor in the general formula (6) is not particularly limited, so long as it is not included in the said components acting as an acceptor.

Spacer $R_S$ may be present between the main chain and $R_D$ or $R_A$. The presence of the spacer $R_S$therebetween is preferable owing to the enhanced degree of polymerization of the polymer.

The spacer $R_S$ in the present electroconductive polydiacetylene includes the following chains:

$-(CH_2)_n-$; methylene chain

$-(CH_2)_n-O-$; ether-type chain

$-(CH_2)_n-COO$; ester-type chain

$-(CH_2)_n-OCONH-$; urethane-type chain

$-(CH_2)_n-OSOO-$; sulfonyl-type chain

where n is an integer of l or more.

At least one of the foregoing chains may be used as the spacer $R_S$. The donor component or the acceptor component can be linked with any side of the methylene chain.

In the present invention, charge transfer complexes can be formed from an electron donor substance and an electron acceptor substance according to any of a chemically complexing procedure and an electrochemically complexing procedure. Any of the known procedures may be employed [Kagaku Sosetsu (Review on Chemistry)", Vol. 42, 59-90 (l983)]. For example, the charge transfer complexes can be obtained according to a chemical procedure by mixing a solution of electron donor substance with a solution of electron acceptor substance, or according to an electrochemical procedure by dipping two platinum electrodes in a dilute solution of an electron donor substance and an electron acceptor substance and passing a constant electric current at 5 to 6 $\mu A$, thereby depositing crystals of charge transfer complexes on the anode.

A molar ratio of the electron acceptor substance to the electron donor substance is preferably in a range of 0.1 to 10:1. It is particularly preferable that the donor part $R_D(R_D')$ and the acceptor part $R_A(R_A')$ are in a ratio of 1:1 by mole. That is, it is particularly preferable that the electron acceptor substances of the general formulae (5) and (6) are in mixing ratios of 0.5 moles and 1 mole, respectively, to one mole of the electron donor substance of the formula (1), 1 mole and 2 moles, respectively, to one mole of the electron donor material of the general formula (2), and 0.5 moles and 1 mole, respectively, to one mole of the electron donor material of the general formula (3). Furthermore, it is particularly preferable that the electron donor substances of the general formulae (2) and (3) are in ratios of 0.5 moles and 1 mole, respectively, to one mole of the electron acceptor substance of the general formula (4).

The form of the charge transfer complexes is not particularly limited, but single crystal is preferable from the viewpoint of electroconductivity, and a thin film form is preferable from the viewpoint of application. The thin film can be made by any of so far well known vacuum evaporation, spin casting, Langmuir-Brodgett method, etc. The complexes may be melted into a thin film form.

The present electroconductive polydiacetylene can be ultimately obtained by solid state polymerization of the said charge transfer complexes. The polymerization can be carried out by heat polymerization, photo polymerization, $\gamma$-ray-irradiated polymerization, etc. according to so far known procedure [J. Polym. Sci., Polym. Phys. Ed., 16, 859 (1978)]. Polymerization conditions are not particularly limited, but polymerization, for example, heat polymerization, proceeds more rapidly at a higher temperature and thus it is preferable to conduct the polymerization at a temperature just below the melting point of the diacetylene complex. Furthermore, photo polymerization and $\gamma$-ray irradiated polymerization proceed more rapidly by heating to a temperature just below the melting point of the complex.

Degree of polymerization of the present polydiacetylene is preferably at least 6, most preferably at least 15.

Example 1

5 g of $K_2CO_3$ was added to 14 g (0.1 mole) of 3,5-octadiyne-1,8-diol, and then 37 g (0.2 mole) of 2,4-dinitrofluorobenzene was dropwise added to the resulting solution. The solution was stirred at 25°C for 24 hours, and then 500 ml of water was added to the reaction solution, whereby yellow precipitates were formed. The precipitates were recovered therefrom by filtration and recrystallized from acetone, whereby the following electron acceptor substance (8) was obtained.

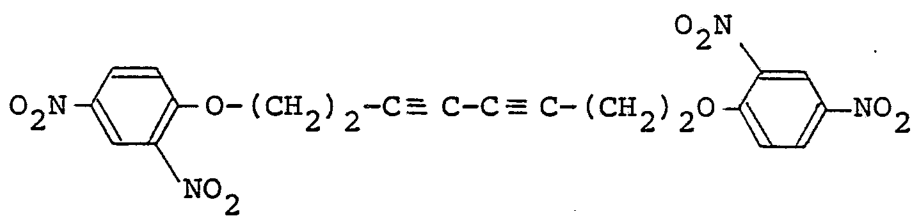

..... (8)

The substance (8) was identified by IR spectral analysis, elemental analysis, etc.

4.7 g (0.01 mole) of the electron acceptor substance (8) and 4 g (0.02 moles) of pyrene as an electron donor substance were dissolved in 100 ml of acetone and the solution was refluxed for two hours. By cooling the solution, dark green crystals were obtained. It was found by diffuse reflection spectral measurement of the crystals that the color was based on a charge transfer interaction. An electroconductive polydiacetylene having a metallic luster was obtained from the crystals by $\gamma$-ray irradiation. It was found by the elemental analysis that the electroconductive polydiacetylene had C:H:N = 69.5:4.0:6.5 and a ratio of pyrene to said substance (8) of 2:1 by mole. The electroconductive polydiacetylene had an electroconductivity $\sigma$ of $5.6 \times 10^{-6}$ S/cm.

Example 2

3.6 g (0.02 moles) of undecinoic acid was neutralized with l5 ml of l0% KOH, and l00 mg of $NH_2OH \cdot HCl$ and 500 mg of cuprous chloride and then 4 g of an aqueous 70% ethylamine solution were added to the resulting solution. Then, 6.9 g (0.02 moles) of 3-(2-chloranil)-l-bromopropyne was slowly added to the solution. After stirring for 48 hours, the solution was oxidized with 2 $NH_2SO_4$, and the product was extracted with ether. The extract was recrystallized from dimethylformamide, whereby the following electron acceptor substance (9) was obtained.

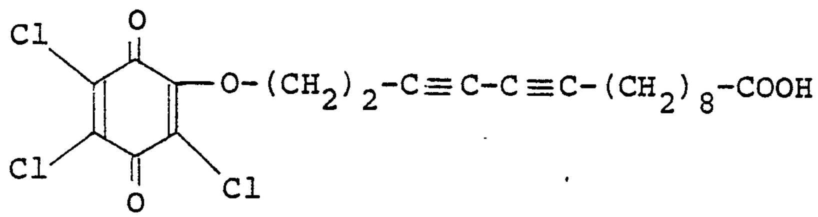

..... (9)

4.4 g (0.0l mole) of the electron acceptor substance (9) and 2.0 g (0.0l mole) of tetrathiotetracene as an electron donor substance were refluxed in toluence, whereby dark red crystals were obtained. The crystals were dissolved in chloroform, and a thin film of the dark red complex by Langmuir-Blodgett method was obtained from the solution. An electroconductive polydiacetylene having a metallic luster was obtained by exposing the thin film to irradiation of ultraviolet rays. Determination of complex and final product was carried out in the same manner as in Example l. It was found by the elemental analysis that the electroconductive polydiacetylene had C:H:S = 49.l:3.7:l8.9 and was composed of complexes having a ratio of the electron acceptor substance (9) to tetrathiotetracene of l:l by mole. The product had an electroconductivity $\sigma$ of $1.2 \times 10^{-1}$ S/cm.

Example 3

2.7 g (0.02 moles) of 3,5-octadiyne-l,8-diol was dissolved in l00 ml of tetrahydrofuran, and then 7.5 g (0.05 moles) of l-pyrenesulfonyl chloride was added thereto. Then, 40 ml of an aqueous potassium hydroxide solution (4 g) was slowly added to the solution. The solution was then stirred at 25°C for 24 hours, 500 ml of water was added thereto, and the resulting precipitates were recovered by filtration and recrystallized from dimethylformamide. The following electron donor substance (l0) was obtained.

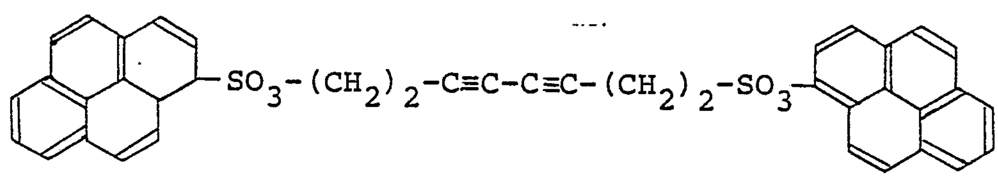

..... (10)

6.7 g (0.0l mole) of the electron donor substance (l0) and 4.7 g (0.0l mole) of the electron acceptor substance (8) obtained in the same manner as in Example 3 were refluxed in toluene, whereby black crystals were obtained. The black crystals were heated at l00°C for two weeks, whereby an electroconductive polydiacetylene having a metallic luster was obtained. Determination of complex and final product was made in the same manner as in Example l, and it was found that the electroconductive polydiacetylene had C:H:N = 6l.5:3.6:5.0 and was composed of complexes having a ratio of the substance (l0) to the substance (8) of l:l by mole. The electroconductive polydiacetylene had an electroconductivity $\sigma$ of $4 \times 10^{-6}$ S/cm.

Example 4

4.4 g (0.01 mole) of the electron acceptor substance (9) obtained in the same manner as in Example 2 and 3.4 g (0.005 moles) of the electron donor substance (10) obtained in the same manner as in Example 3 were refluxed in toluene, whereby blackish green crystals were obtained. A spin-cast film was obtained from a solution of the crystals in dichloromethane. By exposing the cast film to irradiation of ultraviolet rays, an electroconductive polydiacetylene having a metallic luster was obtained. Determination of complex and final product was made in the same manner as in Example 1. It was found from the result of C:H:S = 61.5:4.3:4.2 that complexes having a ratio of the substance (10) to the substance (9) of 1:2 by mole were formed. The electroconductive polydiacetylene had an electroconductivity $\sigma$ of $1.2 \times 10^{-7}$ S/cm.

Example 5

3.6 g (0.02 moles) of undecinoic acid was newtralized with 15 ml of 10% KOH, and 100 mg of $NH_2OH \bullet HCl$ and 500 mg of cuprous chloride, and then 4 g of aqueous 70% ethylanine solution were added to the solution. Then, 5.6 g (0.02 moles) of 3-(N-carbazoyl)-1-bromopropylene was slowly added to the solution. After stirring for 24 hours, the solution was oxidized with $2NH_2SO_4$, and the product was extracted with ether. The extract was recrystallized from dimethylformamide, whereby the following electron donor substance (11) was obtained.

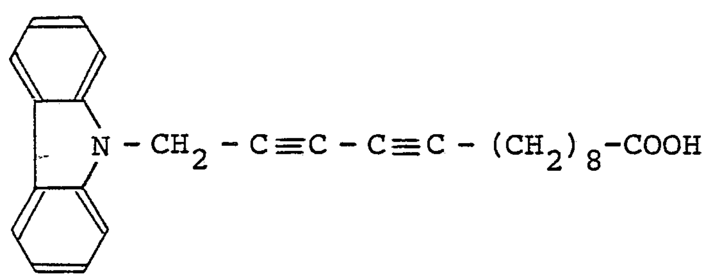

..... (11)

Identification of the substance (11) was carried out by infrared absorption spectrum and elemental analysis.

3.8 g (0.01 mole) of the electron donor substance (11) and 2.3 g (0.005 moles) of the electron acceptor substance (8) obtained in the same manner as in Example 1 were refluxed in toluene, whereby black crystals were obtained. The crystals were exposed to $\gamma$-rays (50 Mrod), whereby an electroconductive polydiacetylene having a metallic lustor was obtained. Determination of complex and final product was made in the same manner as in Example 1, and it was found from the result of C:H:N = 70.1:5.5:6.6 that complexes having a ratio of the substance (11) to the substance (8) of 2:1 by mole were formed. The electroconductive polydiacetylene had an electroconductivity $\sigma$ of $7.9 \times 10^{-7}$ S/cm.

Example 6

4.4 g (0.01 mole) of the electron acceptor substance (9) obtained in the same manner as in Example 2 and 3.8 g (0.01 mole) of the electron acceptor substance (11) obtained in the same manner as in Example 5 were refluxed in acetone, whereby blackish red crystals were obtained. The crystals were exposed to $\gamma$-ray irradiation (50 Mrad), whereby electroconductive polydiacetylene having a metallic luster was obtained. Determination of complex and final product was made in the same manner as in Example 1, and it was found from the result of C:H:N = 67.2:5.6:1.7 that complexes having a ratio of the substance (11) to the substance (9) of 1:1 by mole were formed. The electroconductive polydiacetylene had an electroconductivity $\sigma$ of $7 \times 10^{-5}$ S/cm.

Example 7

6.7 g (0.01 mole) of the electron donor substance (10) obtained in the same manner as in Example 3 and 6 g (0.05 moles) of iodine as an electron acceptor substance were refluxed in acetone, whereby blackish green crystals were obtained. The crystals were exposed to $\gamma$-ray irradiation (50 Mrad), whereby electroconductive polydiacetylene having a metallic luster was obtained. Determination of complex and fuel product was made in the same manner as in Example 1, and it was found from the result of C:H:S = 31.2:1.8:4.5 that complexes having a ratio of the substance (10) to iodine of 1:6 by mole were formed. The electroconductive polydiacetylene had an electroconductivity $\sigma$ of 3.6 S/cm.

Example 8

3.8 g (0.01 mole) of the electron donor substance (11) obtained in the same manner as in Example 5 and 2 g (0.01 mole) of tetracyanoquinodimethane as an electron acceptor substance were refluxed in toluene, whereby blackish green crystals were obtained. The crystals were exposed to $\gamma$-ray irradiation (50 Mrad), whereby electroconductive polydiacetylene having a metallic lustor was obtained. Determination of complex and final product was made in the same manner as in Example 1. It was found from the result of C:H:N = 76.9:5.3:12.1 that complexes having a ratio of the substance (11) to tetracyanoquinodimethane of 1:1 by mole was formed. The electroconductive polydiacetylene had an electroconductivity $\sigma$ of $4.1 \times 10^{-5}$ S/cm.

Example 9

3.6 g (0.02 moles) of 3-(1-pyrenebutylcarboxylate)-1-propylene was dissolved in 200 ml of dimethylformamide, and 100 ml of $NH_2OH \bullet HCl$, 500 mg of cuprous chloride and 4 g of an aqueous 70% ethylamine solution were added thereto. Then, 5.6 g (0.02 moles) of 3-(2-chloranil)-1-bromopropyne was slowly added to the solution. After stirring for 24 hours, the product was recovered therefrom by filtration and recrystallized from toluene, whereby the following intramolecular charge transfer-type compound (12) was obtained.

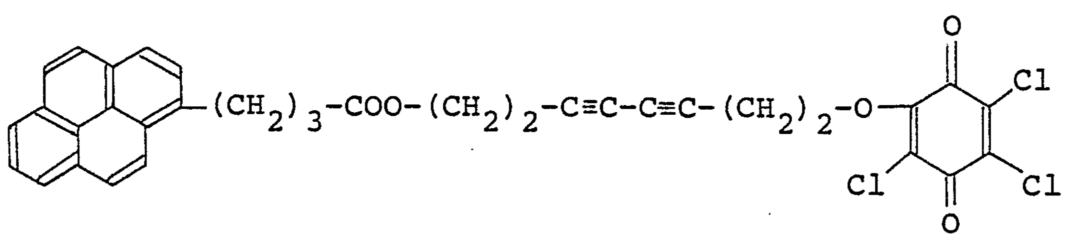

..... (12)

Determination of the compound was carried out by infrared absorption spectrum, elemental analysis, etc.

Single crystals of the compound (12) were exposed to direct irradiation of $\gamma$-rays (50 Mrad), whereby electroconductive polydiacetylene having a metallic luster was obtained. Determination of final product was made in the same manner as in Example 1, and it was found from the result of C:H = 65.1:3.7 that a polymer composed of the complexes (12) was formed. The electroconductive polydiacetylene had an electroconductivity $\sigma$ of $2.8 \times 10^{-6}$ S/cm.

The present electroconductive polydiacetylene is quite a novel electroconductive polymer whose electroconductivity has been developed by regular arrangement of charge transfer complexes on the side chains. Thus, the present electroconductive polymer is free from troublesome doping treatment after the preparation of polymer as in the case of the so far known electroconductive polymers based on the main chain. Furthermore, the present electroconductive polymer can meet every needs owing to the possibility to produce derivatives having various characteristics through combinations of side chains, and also has a distinguished mechanical strength because the polymer skeleton is a polydiacetone of good crystallinity.

By virtue of these advantages the present electroconductive polydiacetylene is more suitable for the production of or application to secondary batteries, solar cells, junction devices, etc., than the so far known organic semi-conductors or electroconductive polymers. Color change by polymerization or transition between the acetylene type and the butatriene type of the main chain can be utilized in display element, etc.

The present electroconductive polydiacetylene has an electroconductivity of $10^{-7}$ to $10^{1}$ S/cm, and an electroconductivity of more than $10^{-1}$ S/cm can be readily obtained.

## Claims

1. An electroconductive polydiacetylene having a structural unit represented by the following general formula:

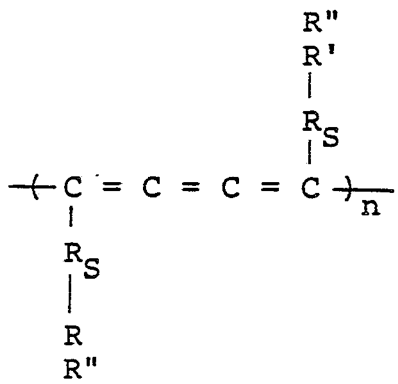

wherein R and R′ are terminal groups on diacetylene side chains, $R_S$ is optional and an atom or atomic group not in a conjugated state with the main chain, R″ is an electron acceptor substance or an electron donor substance, and n is an integer of 6 or more, and at least one of the terminal groups R and R′ on the side chains is combined with the electron acceptor substance or electron donor compound R″, thereby forming a charge transfer complex.

2. An electroconductive polydiacetylene according to claim 1, wherein R and R′ are directly combined with the main chain without the presence of $R_S$.

3. An electroconductive polydiacetylene according to claim 1, wherein $R_S$ is a polymer having the same structural unit as that of the polydiacetylene represented by the said general formula.

4. An electroconductive polydiacetylene according to claim 1, wherein R is an electron donor group and R′ is an electron acceptor group and the charge transfer complex is formed by single components.

5. An electroconductive polydiacetylene according to claim 1, wherein $R_S$ is at least one of methylene chain, ether-type methylene chain, ester-type methylene chain, urethane-type methylene chain and sulfonyl-type methylene chain.

European Patent Office

# EUROPEAN SEARCH REPORT

Application number

EP 87307196.3

| Category | Citation of document with indication, where appropriate, of relevant passages | Relevant to claim | CLASSIFICATION OF THE APPLICATION (Int. Cl.4) |
|---|---|---|---|
| X | CHEMICAL ABSTRACTS, vol. 105, no. 4, July 28, 1986, Columbus, Ohio, USA<br>YOSHIDA, HARUO; ISAKA, KENICHI "Conductive polydiacetylene" page 659<br>* Abstract-no. 33 924u *<br>& JP-A2-60-208 350 (SHOWA DENKO)<br>-- | 1,5 | H 01 B 1/12<br>C 08 F 38/00 |
| X | CHEMICAL ABSTRACTS, vol. 99, no. 14, October 3, 1983, Columbus, Ohio, USA<br>AGENCY OF INDUSTRIAL SCIENCES AND TECHNOLOGY "Electrically conductive polydiacetylenes" page 582<br>* Abstract-no. 114 483j *<br>& JP-A2-58-47 009 (AGENCY...) *<br>-- | 1,5 | TECHNICAL FIELDS SEARCHED (Int. Cl.4) |
| A | JOURNAL OF POLYMER SCIENCE, vol. 16, 1978, John Wiley & Sons, Inc.<br>CHANCE et al. "Solid-State Polymerization of a Diacetylene Crystal: Thermal, Ultraviolet, and $\gamma$-Ray Polymerization of 2,4-Hexadiyne-1,6-Diol Bis-(p-Toluene Sulfonate)" pages 859-881<br>* Pages 859, 875 *<br>---- | 1 | H 01 B 1/00<br>C 08 F 38/00<br>C 08 L 49/00 |

The present search report has been drawn up for all claims

| Place of search | Date of completion of the search | Examiner |
|---|---|---|
| VIENNA | 27-11-1987 | KUTZELNIGG |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document